Europäisches Patentamt

European Patent Office

Office européen des brevets

(19)

(11) EP 0 565 462 B1

(12) FASCICULE DE BREVET EUROPEEN

(45) Date de publication et mention
de la délivrance du brevet:
**02.07.1997 Bulletin 1997/27**

(51) Int Cl.6: **G01P 15/13**, G01L 11/00,
G01L 1/08, G01D 3/06

(21) Numéro de dépôt: **93420147.6**

(22) Date de dépôt: **06.04.1993**

(54) **Perfectionnement aux micro-capteurs pendulaires asservis**

Verbesserte Pendelmikrosensoren mit Kraftrückkopplung

Improvements to pendular micro-sensors having force-feed-back

(84) Etats contractants désignés:
**CH DE GB IT LI SE**

(30) Priorité: **07.04.1992 FR 9204520**

(43) Date de publication de la demande:
**13.10.1993 Bulletin 1993/41**

(73) Titulaire: **SEXTANT AVIONIQUE S.A.**
**F-92366 Meudon la Forêt Cédex (FR)**

(72) Inventeurs:
• **Barny, Hervé**
**F-26000 Valence (FR)**
• **Fima, Henri**
**F-26120 Malissard (FR)**

• **Torregrosa, Michel**
**F-26760 Beaumont Les Valence (FR)**

(74) Mandataire: **de Beaumont, Michel**
**1bis, rue Champollion**
**38000 Grenoble (FR)**

(56) Documents cités:
**EP-A- 0 390 721**      **US-A- 3 877 313**

• **"SENSORS AND ACTUATORS" vol. 17, no. 3 &**
**4, Mai 1989, LAUSANNE, CH pages 629 - 637 ,**
**XP000081664 MARK VAN PAEMEL 'Interface**
**Circuit for Capacitive Accelerometer'**

## Description

La présente invention a trait à des micro-capteurs pendulaires asservis électrostatiquement, comprenant un élément pendulaire agencé pour être soumis à une force représentative d'une grandeur physique à mesurer, au moins une paire d'électrodes comportant une électrode mobile solidaire de l'élément pendulaire et une électrode fixe disposée en regard de l' électrode mobile, et un système de détection des déplacements de l'élément pendulaire contrôlant un système d'asservissement électrostatique. Le système d'asservissement applique sur la paire d'électrodes des tensions électriques de création de forces électrostatiques de rappel de l'élément pendulaire.

La présente invention concerne plus particulièrement, le système d'asservissement de l'élément pendulaire et son principe de fonctionnement.

Les micro-capteurs du type cité ci-dessus comprennent une cellule de détection de la grandeur physique, comportant une pièce mobile en translation ou en rotation, nommée ici élément pendulaire, des moyens de suspension de l'élément pendulaire, et des moyens permettant d'appliquer sur l'élément pendulaire une force représentative d'une grandeur physique à mesurer.

Pour réaliser la cellule de détection, on utilise des techniques de micro-usinage ou de micro-gravure sur des matériaux tels que le silicium ou le quartz.

Ces micro-capteurs pendulaires peuvent être utilisés pour détecter une accélération, une inclinaison, une pression, et, de façon générale, toute grandeur physique à partir de laquelle on peut générer une force agissant sur l'élément pendulaire.

A titre d'exemple, la sensibilité d'un micro-accéléromètre pendulaire est obtenue grâce au phénomène d'inertie, la force appliquée à l'élément pendulaire étant le produit de la masse de l'élément pendulaire par la valeur de l'accélération. Pour un micro-capteur de pression, on prévoit par exemple une membrane séparant le milieu dans lequel règne la pression à mesurer, d'un milieu dans lequel règne une pression de référence, l'élément pendulaire étant agencé pour être au contact de la membrane ou solidaire de celle-ci, afin d'être soumis à une force résultant de la différence entre la pression à mesurer et la pression de référence.

Les micro-capteurs pendulaires asservis électrostatiquement comprennent, en outre, un système de détection des déplacements de l'élément pendulaire, agissant sur un système d'asservissement électrostatique qui génère sur l'élément pendulaire une force de rappel s'opposant à la force due à la grandeur physique. L'élément pendulaire étant maintenu en position de repos, l'intensité de la grandeur physique est déterminée en mesurant la force de réaction.

On connait divers systèmes de détection des déplacements de l'élément pendulaire, notamment des systèmes de détection dits "capacitifs", dans lesquels la position de l'élément pendulaire est déterminée à partir des variations capacitives d'au moins un condensateur comprenant une électrode fixe, et une électrode mobile solidaire de l'élément pendulaire.

Communément, pour produire une force électrostatique de rappel sur l'élément pendulaire, on applique, entre une électrode fixe du capteur et une électrode solidaire de l'élément pendulaire, une tension continue allant de quelques volts jusqu'à plusieurs centaines de volts, selon les applications. Il se crée entre les électrodes une attraction électrostatique d'intensité proportionnelle au carré de la tension appliquée, qui tend à rapprocher l'élément pendulaire de l'électrode fixe du capteur.

Lorsqu'il faut contrôler le sens de la force électrostatique de rappel, on utilise au moins deux couples d'électrodes disposés de part et d'autre de l'élément pendulaire. On peut alors procèder au rappel de l'élément pendulaire en appliquant une tension sur le couple d'électrodes approprié. On peut aussi procéder différemment, en entretenant en permanence deux forces électrostatiques antagonistes, et en jouant sur le déséquilibre de leurs intensités pour générer une force de rappel résultante dont le sens est celui de la force électrostatique de plus grande intensité.

On connait principalement deux techniques pour faire varier l'intensité de la force électrostatique. La première technique consiste à faire varier la valeur de la tension continue appliquée aux électrodes. La deuxième technique, dite à "modulation de largeur d'impulsion", consiste à utiliser des créneaux périodiques de tension continue, et à faire varier le rapport cyclique des créneaux afin de moduler la valeur moyenne de la tension d'asservissement.

Le brevet américain n° 3877313 décrit un accéléromètre électrostatique comportant des électrodes de détection et de rappel électrostatique distinctes. Un circuit de détection applique, sur les électrodes de détection, des tensions d'excitation sinusoïdales tandis qu'un circuit d'asservissement numérique applique, sur les électrodes de rappel électrostatique, des impulsions de courant à valeur constante référencées à la masse.

Pour simplifier la réalisation de la cellule de détection, on utilise souvent les électrodes d'asservissement pour la détection de position, on s'arrange alors pour que les tensions de détection et d'asservissement ne se perturbent pas mutuellement.

Pour fixer les idées, on va décrire des exemples de cellules de détection sensibles à une grandeur physique.

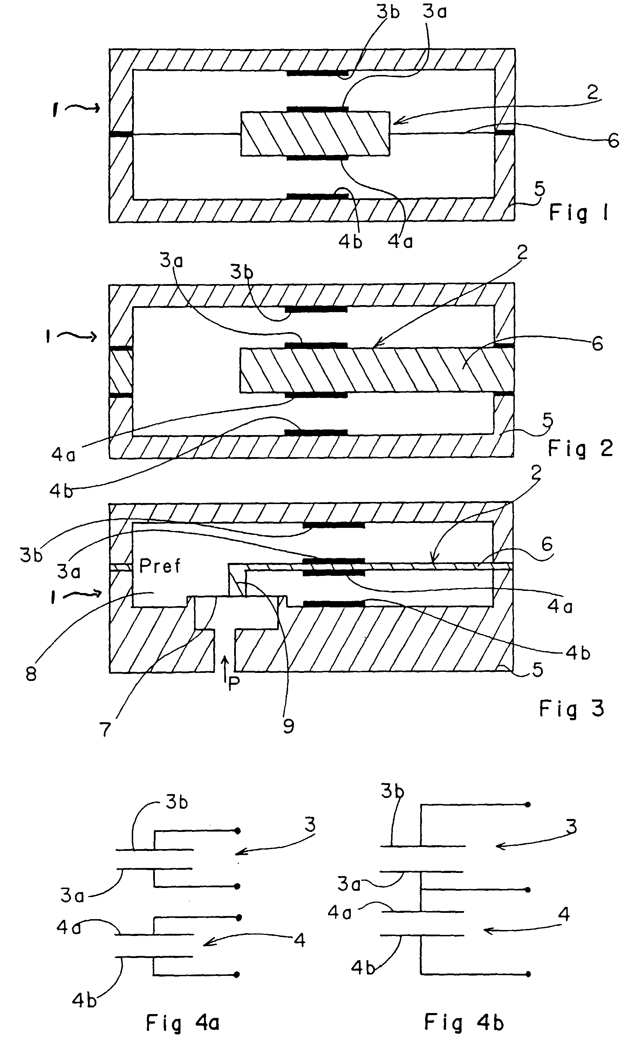

Les figures 1, 2 et 3, qui ne sont données qu'à titre d'exemple, illustrent différents types de cellules sensibles comportant deux couples d'électrodes de rappel. Les figures 1 et 2 représentent très schématiquement des cellules sensibles de micro-capteurs inertiels, pouvant détecter une accélération, une inclinaison, une vitesse angulaire ...
La figure 3 représente très schématiquement la cellule sensible d'un micro-capteur de pression. Chacune de ces cellules sensibles 1 comprend un élément pendulaire 2 comportant, sur deux faces opposées, des électrodes 3a, 4a agencées respectivement en regard de deux électrodes fixes 3b, 4b solidaires du corps 5 de la cellule sensible 1, l'ensemble formant deux couples d'électrodes 3, 4 de rappel électrostatique, agissant chacun dans des directions complémentaires.

Des moyens de suspension 6 maintiennent l'élément pendulaire 2 en l'absence de force électrostatique de rappel. Dans les figures 2 et 3, les moyens de suspension 6 sont confondus avec la base 6 de l'élément pendulaire 2 qui a la forme d'une poutre disposée en porte à faux.

La cellule sensible 1 de la figure 3 comprend en outre des moyens permettant d'appliquer sur l'élément pendulaire 2 une force représentative de la pression à mesurer, ici une membrane 7 séparant le milieu extérieur à la cellule sensible 1, d'un milieu interne 8, où règne une pression P de référence. L'élément pendulaire comporte une excroissance 9 le mettant au contact de la membrane 7.

En relation avec la figure 4a, les trois cellules sensibles peuvent être représentées par un même schéma électrique équivalent, comprenant uniquement les deux couples d'électrodes 3, 4 déjà décrits. Dans les figures 1 à 3, les dimensions des divers éléments et les espaces séparant les électrodes 3a et 3b, ou 4a et 4b, ne sont pas à l'échelle mais ont été tracés arbitrairement pour faciliter la lisibilité des figures et en simplifier le dessin. En réalité, une cellule sensible 1 du type ci-décrit, présente une épaisseur de quelques dixièmes de millimètres et une longueur de quelques millimètres, la distance entre les électrodes ne valant que de quelques dizaines de microns.

On n'a pas représenté sur les figures 1 à 3 les liaisons électriques permettant d'accèder aux électrodes 3a,3b, 4a,4b. Selon les filières technologiques suivies et les matériaux employés, les solutions sont diverses et ne font pas l'objet de la présente description.

On notera cependant que l'élément pendulaire 2 pourrait être réalisé en matériau conducteur, par exemple du silicium, et les électrodes 3a, 4a obtenues par un dopage du silicium. Ceci se traduirait par une liaison électrique unique pour les électrodes 3a et 4a, comme indiqué en figure 4b.

Les micro-capteurs décrits ci-dessus présentent de grands avantages en raison de leur faible encombrement et de leur bonne sensibilité. Néanmoins, on constate parfois à l'usage que l'information délivrée par ces micro-capteurs dérive au cours du temps, pour une même valeur de la grandeur physique.

Un objet de la présente invention est de pallier cet inconvénient.

Un objet plus particulier de la présente invention est de supprimer les phénomènes de dérive sans modifier la structure géométrique des micro-capteurs connus.

La présente invention repose sur la constatation faite par la demanderesse, de l'existence de tensions parasites continues, susceptibles de dériver dans le temps et de varier d'un capteur à l'autre, qui se superposent, au niveau des électrodes du capteur, aux tensions délivrées par le système d'asservissement. La demanderesse attribue ces tensions parasites à des phénomènes physico-chimiques affectant les matériaux conducteurs des électrodes et leurs interfaces.

En se basant sur cette analyse, la demanderesse propose un procédé d'application de tensions d'asservissement qui permette de s'affranchir de l'influence de ces tensions parasites.

Plus particulièrement, la présente invention prévoit un procédé pour produire une force d'attraction électrostatique entre une électrode mobile et une électrode fixe d'un micro-capteur de grandeur physique, ladite électrode mobile étant solidaire d'un élément pendulaire sensible à ladite grandeur physique, caractérisé en ce qu'il consiste à appliquer auxdites électrodes une tension électrique de valeur moyenne nulle.

Selon un mode de réalisation du procédé de l'invention, ladite tension électrique est une tension périodique de fréquence très supérieure à la fréquence de coupure de l'élément pendulaire.

Avantageusement, pour asservir au moyen de forces électrostatiques un élément pendulaire d'un micro-capteur comprenant au moins une première et une deuxième paires d'électrodes comportant chacune une électrode mobile solidaire de l'élément pendulaire et une électrode fixe disposée en regard de ladite électrode mobile, et un système de détection des déplacements de l'élément pendulaire délivrant un signal de commande de l'asservissement à réaliser, on applique respectivement sur les paires d'électrodes une première tension et une deuxième tension d'asservissement, lesdites première et deuxième tensions d'asservissement sont des tensions de même fréquence, et la différence des carrés des amplitudes respectives des première et deuxième tensions d'asservissement constitue le produit d'un terme constant par un terme proportionnel audit signal de commande.

Avantageusement encore, ladite première tension d'asservissement, respectivement deuxième tension d'asservissement, est obtenue par soustraction, respectivement par addition, d'une tension périodique d'amplitude constante et d'une tension périodique d'amplitude proportionnelle audit signal de commande.

Selon un autre mode de réalisation du procédé de l'invention, ladite tension électrique comprend une pluralité de signaux électriques de mêmes durées. De préférence, chacun desdits signaux électriques a une valeur moyenne nulle.

Avantageusement, chacun desdits signaux électriques comprend un train d'impulsions périodiques.

Avantageusement encore, lesdits trains d'impulsions périodiques comprennent une alternance de créneaux de tensions continues de signes contraires.

L'invention concerne également un micro-capteur pendulaire asservi au moyen de forces électrostatiques produites selon ledit autre mode de réalisation du procédé de l'invention, comprenant un élément pendulaire agencé pour être soumis à une force représentative d'une grandeur physique à mesurer, au moins une première et une deuxième paires d'électrodes comportant chacune une électrode mobile solidaire de l'élément pendulaire et une électrode fixe disposée en regard de ladite électrode mobile, caractérisé en ce qu'il comprend :

- un groupe d'interrupteurs et au moins deux sources de tensions continues de signes contraires,
- un circuit intégrateur dont la sortie est appliquée en entrée d'un modulateur numérique du type sigma-delta par l'intermédiaire d'un filtre, ledit modulateur numérique délivrant un signal logique dont la valeur moyenne est modulée en fonction de la tension de sortie dudit circuit intégrateur,
- un circuit numérique de séquencement et de commande dudit groupe d'interrupteurs, auquel est appliqué le signal logique, ledit circuit numérique et ledit groupe d'interrupteurs étant agencés pour :

  - pendant des phases d'asservissement électrostatique de l'élément pendulaire :

    - connecter par alternance au moins une électrode d'une paire d'éléctrodes choisie en fonction de la valeur dudit signal logique, à chacune desdites sources de tensions continues, et
    - alterner la source de tension continue connectée à ladite au moins une électrode d'une paire d'électrodes choisie, plusieurs fois pendant une phase d'asservissement, ou plusieurs fois pendant plusieurs phases d'asservissement,

  - pendant des phases de détection de la position de l'élément pendulaire, suivant chaque phase d'asservissement :

    - charger les capacités des paires d'éléctrodes au moyen desdites tensions de sources, puis décharger simultanément lesdites capacités dans ledit intégrateur, avec des courants respectifs contraires.

Avantageusement, chaque électrode de chaque paire d'électrodes est reliée à chacune desdites sources de tensions continues par l'intermédiaire d'un interrupteur dudit groupe d'interrupteurs.

Ces objets, caractéristiques et avantages, ainsi que d'autres de la présente invention seront exposés en détail dans la description détaillée suivante du procédé selon l'invention ainsi que de deux modes particuliers de mise en oeuvre de ce procédé donnés à titre d'exemples non limitatifs, faite en se référant aux dessins annexés, dans lesquels :

les figures 1, 2 et 3 sont des schémas de principe montrant des exemples de cellules sensibles de micro-capteurs pendulaires de types classiques utilisant deux couples d'électrodes de rappel électrostatique, en coupe suivant l'axe de déplacement de l'élément pendulaire,
les figures 4a et 4b montrent l'équivalent électrique des cellules sensibles des figures 1 à 3,
la figure 5 est un schéma de principe d'un mode de réalisation de l'invention, comprenant des circuits analogiques utilisables en association avec les cellules sensibles représentées en figures 1 à 3,
la figure 6 représente de façon schématique un autre mode de réalisation de l'invention, comprenant des circuits numériques utilisables en association avec les cellules sensibles représentées en figures 1 à 3,
les figures 7 et 9 représentent de façon plus détaillée des parties du schéma de la figure 6, et
la figure 8 illustre différents signaux temporels apparaissant en divers points des circuits représentés en figures 7 et 9.

## Influence des tensions parasites sur la force électrostatique

Comme cela a été indiqué précédemment, la présente invention se base sur l'attribution par la demanderesse des phénomènes de dérive apparaissant dans de nombreux capteurs connus, à l'existence de tensions parasites instables, pertubatrices des tensions de commande délivrées par un système d'asservissement.
On va d'abord étudier comment ces tensions parasites se manifestent lors de l'application d'une force électrostatique à un capteur pendulaire.

De façon générale, pour tout couple d'électrodes soumis à une tension électrique U, il se créé entre les électrodes une force d'attraction électrostatique qui a pour expression

$$F = \frac{SU^2}{\varepsilon 2d^2} = KU^2$$

$\varepsilon$ étant la permittivité électrique du gaz présent entre les électrodes, S étant la surface des électrodes, d la distance entre les électrodes, et K une constante regroupant les termes $\varepsilon$, S et d.
On considère maintenant, en se référant aux figures 1 à 4 décrites dans le préambule, un couple d'électrodes 3 ou 4 comportant une électrode fixe 3b ou 4b et une électrode mobile 3a ou 4a solidaire d'un élément pendulaire 2 de micro-capteur.
On va décrire l'effet perturbateur des tensions parasites lorsque la force électrostatique est obtenue au moyen d'une tension continue V ; on représente l'ensemble des tensions parasites présentes sur les électrodes par une tension continue v .

Pour déterminer la force électrostatique, on doit prendre en compte les tensions V et v, et on peut donc écrire : $U = V + v$ , U étant la tension électrique globale agissant sur les électrodes, citée ci-dessus.

Dans ce cas, la force électrostatique engendrée a donc pour expression : $F = K [ V^2 + V^2 + 2 V v ]$ et non pas $KV^2$.

Pour fixer les idées, considérons un exemple numérique, représentatif, dans lequel,

V = 10 V et v = 50 mV.

L'influence du terme 2 Vv sur la force engendrée, beaucoup plus importante que l'influence du terme $v^2$, représente un écart de $2v/V = 2 \times 50 \ 10^{-3}/10$ soit 1% de la force qui serait créée sans tension parasite, ce qui n'est pas négligeable. Cette influence est d'autant plus gênante que comme l'a indiqué précédemment, le terme v varie d'un dispositif à un autre et est susceptible de dériver dans le temps.

On notera que les procédés de l'art antérieur dits "à modulation de largeur d'impulsion" utilisant des créneaux de tension continue, procurent le même résultat que ci-dessus, car l'expression de la force électrostatique s'exprime en fonction de la valeur moyenne des créneaux de tension, qui n'est rien d'autre qu'une tension continue.

## Force électrostatique obtenue par le procédé de l'invention.

Afin d'atténuer l'influence des tensions parasites v sur la force électrostatique d'asservissement, la présente invention propose de créer la force électrostatique au moyen d'une tension de valeur moyenne nulle, pouvant être exprimée de la façon suivante :

$$V' = V_M \ f(t)$$

$V_M$ étant une constante représentant l'amplitude maximum que peut atteindre la tension d'asservissement, f(t) étant une fonction unitaire représentant les fluctuations de la tension d'asservissement, et dont la valeur moyenne est nulle ( $\overline{f(t)} = 0$ ).

De préférence, la tension de commande V' selon l'invention doit avoir une valeur moyenne nulle sur des intervalles de temps très inférieurs à la constante de temps mécanique de l'élément pendulaire, afin que les fluctuations de la tension de commande soient très fortement amorties par l'élément pendulaire. De ce fait on ne tient compte que de la valeur moyenne de la force électrostatique, et on peut alors écrire :

$$\bar{F} = \overline{KU}^2 = K [ V_M^2 \ \overline{f(t)}^2 + v^2 + 2 v V_M \overline{f(t)} ]$$

expression dont le dernier terme est nul, et qui équivaut

donc à

$$\bar{F} = K [ V_M^2 \overline{f(t)}^2 + v^2 ]$$

Le terme $\overline{f(t)}^2$ est une constante non nulle. Si f(t) est une fonction sinusoïdale, $\overline{f(t)}^2 = 0,5$.

Considérons l'exemple suivant, dans lequel on prend, par analogie avec les exemples numériques précédents :

$$V_M = 10 \ V, \ \overline{f(t)}^2 = 0,5 \ et \ V = 50 \ mV \ ;$$

ici, $V_M^2 \ \overline{f(t)}^2 = 0,5 \times 100$ (en volt au carré)

L'influence des tensions parasites, représentée par le terme v²' est $V^2/V_M^{2*} \overline{f(t)}^2$ et ne représente ici que 0,005 % de la force électrostatique qui serait créée sans tensions parasites. L'influence des tensions parasites est donc considérablement diminuée par le procédé de l'invention, n'étant plus que du deuxième ordre.

## Influence des tensions parasites sur l'information de sortie d'un micro-capteur asservi

Les principes théoriques décrits ci-dessus portent sur l'expression de la force électrostatique. On va maintenant étudier l'effet perturbateur des tensions parasites sur l'information de sortie délivrée par un micro-capteur pendulaire dont la cellule sensible comprend classiquement deux couples d'électrodes pour le rappel de l'élément pendulaire, comme celles représentées sur les fig. 1 à 3.

Dans un souci de simplicité, on considère un mode de réalisation classique du procédé d'asservissement de l'art antérieur.

Selon ce mode réalisation, et en se référant à la figure 4, on relie les électrodes 3a et 4a (ou 3b et 4b) à une tension continue de polarisation $V_0$, et on applique respectivement sur les électrodes 3b et 4b (ou 3a et 4a) des tensions continues de commande +V et -V de signes opposés et de même valeurs, les tensions continues de création de forces électrostatiques sur les couples d'électrodes 3 et 4 étant alors respectivement égales à $(V-V_0)$ et $- (V+V_0)$

On peut classiquement exprimer le signal de sortie $V_s$ délivré par un système quelconque de détection de la position de l'élément pendulaire 2 (et utilisé comme information de sortie du micro-capteur), en fonction de la force due à la grandeur physique, s'exerçant sur l'élément pendulaire 2.

En l'absence de tensions parasites, on peut écrire,

$$V_s = K_2 \ B_0 + K_2 \ F^* + K_3 \ F^{*2}$$

$B_0$ représentant le décalage normal introduit par les moyens de suspension 6, dont l'état de repos élastique ne correspond pas par hypothèse à l'état de repos de l'élément pendulaire asservi,

F* étant la force agissant sur l'élément pendulaire 2, résultant de la grandeur physique, $K_2$, $K_3$ étant des constantes de premier et deuxième ordre.

Suite à l'existence des tensions parasites, la valeur du décalage $B_0$ est modifiée d'une quantité $\Delta B_0$, dont on démontre l'expression suivante :

$$\Delta B_0 = 2 K_4 V_0 (v_2 - v_1)$$

$K_4$ étant une constante, $v_1$ et $v_2$ représentant les tensions parasites agissant respectivement sur les couples d'électrodes 3 et 4.

On voit ici que l'expression de la variation $\Delta B_0$ du décalage $B_0$ dépend de la tension de polarisation $V_0$. Il y a un phénomène d'amplification de l'influence des tensions parasites $v_1$, $v_2$, sur la variation $\Delta B_0$ du décalage $B_0$, par la tension de polarisation $V_0$. On considère bien entendu le cas, fréquent en pratique, où $v_1 \neq v_2$.

**Influence des tensions parasites lorsque le micro-capteur est asservi selon le procédé de l'invention.**

Toujours dans un souci de simplicité, on se limite ici à un mode particulier de réalisation de l'invention, qui sera décrit ci-après de façon détaillée, et dans lequel la force électrostatique d'asservissement est générée au moyen de tensions de commandes périodiques.

On applique sur les couples d'électrodes 3, 4, des tensions de valeur moyenne nulle, ici des tensions de commande sinusoïdales $V_a$, $V_b$ que l'on représente de la façon suivante :

$$V_a = V_{Ma} \cos \omega t$$

$$V_b = V_{Mb} \cos \omega t$$

Les deux tensions de commande $V_3$, $V_4$ ayant la même pulsation $\omega$ et étant en phase l'une avec l'autre.

L'expression de la tension de sortie $V_s$ est inchangée par rapport à l'exemple précédent, mais on démontre que la variation $\Delta B_0$ du décalage $B_0$ due aux tensions parasites s'exprime maintenant de la façon suivante :

$$\Delta B_0 = K_4 (v_2^2 - v_1^2) = K_4 (v_2 + v_1)(v_2 - v_1)$$

K4 étant la même constante que dans l'exemple précédent.

Avec le procédé de l'invention, l'influence des tensions parasites $v_1$, $v_2$ est faible, la variation $\Delta B_0$ est réduite d'un facteur $\frac{v_1 + v_2}{2V_0}$ par rapport au procédé de l'art antérieur.

En prenant comme exemple représentatif $v_1 + v_2 = 100$ m V et $V_0 = 10$V, $v_1$ étant bien entendu supposé différent de $v_2$, on voit que l'influence des tensions parasites sur la sortie d'un micro-capteur asservi est 200 fois plus faible lorsque le procédé de l'invention est utilisé.

**Premier mode de réalisation de l'invention**

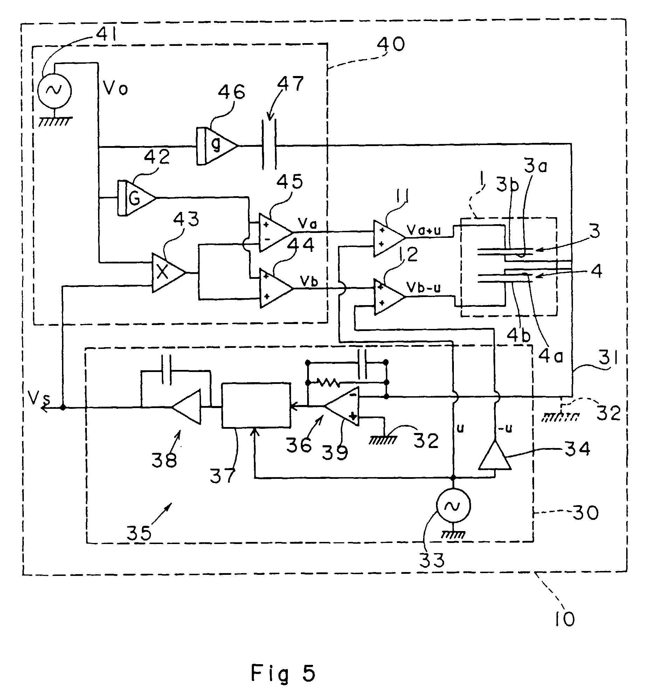

La figure 5 représente la partie électronique d'un micro-capteur 10 asservi selon le procédé de l'invention. Le micro-capteur 10 comprend une cellule sensible 1 dont des exemples sont décrits dans le préambule en relation avec les figures 1 à 3. La cellule sensible 1 est représentée sur la figure 5 comme sur la figure 4a, selon son schéma électrique équivalent comprenant deux couples 3, 4 d'électrodes 3a, 3b, respectivement 4a, 4b.

Le micro-capteur 10 comprend en outre un circuit d'asservissement 40, et un circuit de détection 30 des déplacements de l'élément pendulaire 2 délivrant une tension $V_s$ utilisée comme information de sortie du micro-capteur 10, et comme signal de commande du circuit d'asservissement 40.

Le circuit d'asservissement 40 comprend une source de tension 41 délivrant une tension périodique, ici une tension sinusoïdale de pulsation $\omega$, de fréquence f et d'amplitude $V_0$, appliquée respectivement à l'entrée d'un amplificateur 42 de gain G, et à une première entrée d'un multiplieur 43 dont l'autre entrée reçoit le signal de commande $V_s$ délivré par le circuit d'asservissement 30. Les tensions délivrées par l'amplificateur 42 et le multiplieur 43 sont additionnées au moyen d'un additionneur 44 et soustraites au moyen d'un amplificateur différentiel 45 recevant la sortie du multiplieur 43 sur l'entrée négative et la sortie de l'amplificateur 42 sur l'entrée positive.

A la sortie des amplificateurs différentiel 45 et additionneur 44, on trouve respectivement des tensions $V_a$, $V_b$ dont les expressions sont les suivantes :

$$V_a = (G - V_S) V_0 \cos \omega t$$

$$V_b = (G + V_S) V_0 \cos \omega t$$

Les tensions $V_a$, $V_b$ sont destinées à être appliquées respectivement aux couples d'électrodes 3, 4, d'une façon qui sera décrite ci-après, afin de commander la force électrostatique de rappel de l'élément pendulaire 2.

Le circuit de détection 30 est un circuit classique de détection capacitive, utilisant ici les couples d'électrodes d'asservissement 3, 4 comme condensateurs 3,4 de détection.

Le circuit de détection 30 délivre deux tensions alternatives de détection de signes opposés, respectivement u, - u. A cet effet, le circuit de détection 30 comprend une source de tension 33, ici sinusoïdale de pulsation $\omega'$ et de fréquence f', délivrant la tension u, la tension - u étant obtenue au moyen d'un déphaseur 34 alimenté par la source de tension 33.

Afin de mélanger les tensions d'asservissement $V_a$, $V_b$ et les tensions de détection u, - u, le micro-capteur 10 comprend deux amplificateurs additionneurs 11, 12 recevant les tensions $V_a$ et u, respectivement $V_b$ et - u, sur leurs entrées, et délivrant les tensions $V_a$ + u, respectivement $V_b$ - u, sur les électrodes 3b et 4b des condensateurs 3, 4.

Le circuit de détection 30 comprend en outre une chaîne de détection 35 comportant, en entrée, un convertisseur courant-tension 36 présentant un gain élevé, attaquant un démodulateur synchrone 37 ayant une entrée de synchronisation reliée à la source de tension 33. La sortie du démodulateur 37 est appliquée à un intégrateur 38, présentant de préférence un gain pratiquement infini, et délivrant la tension de sortie $V_s$ citée précédemment.

Le convertisseur 36 est représenté sur la figure 5 par un amplificateur opérationnel 39, dont l'entrée négative est l'entrée de la chaine de détection 35 et dont l'entrée positive est reliée à la masse 32 de l'électronique du capteur 20. La fonction de conversion courant-tension du convertisseur 36 est réalisée par une résistance et un condensateur en parallèle reliant l'entrée négative et la sortie de l'amplificateur opérationnel 39.

Les électrodes des condensateurs 3, 4 restant disponibles, ici les électrodes 3a et 4a, sont reliées à une liaison électrique 31 menant à l'entrée de la chaine de détection 35, c'est à dire ici à l'entrée négative de l'amplificateur opérationnel 39, faisant effet de masse fictive 32 (représentée en pointillé sur la figure 5) et permettant la circulation d'un courant dans les condensateurs 3 et 4.

Les tensions de détections u, - u créent dans chacun des condensateurs 3, 4 des courants alternatifs qui se superposent dans la liaison 31 pour former, à l'entrée de la chaîne de détection 35, un courant dit de déséquilibre, représentatif de l'écart entre les capacités de détection 3, 4, ce courant de déséquilibre étant nul lorsque les capacités 3,4 sont égales.

Le convertisseur 36 et le démodulateur 37 permettent d'obtenir, à partir du courant de déséquilibre, une tension d'erreur proportionnelle au déséquilibre des capacités de détection 3,4, l'intégrateur 38 permettant ensuite d'obtenir la tension de sortie $V_s$ nécessaire à la commande du circuit d'asservissement 40.

On vérifiera maintenant le bon fonctionnement du circuit d'asservissement 40 de l'invention, en montrant que la force électrostatique de rappel F de l'élément pendulaire 2 est proportionnelle à la tension de commande $V_s$ injectée en entrée du circuit d'asservissement 40.

La force de rappel F est une résultante de deux forces électrostatiques contraires $F_a$, $F_b$, créées sur les couples d'électrodes 3,4 par les tensions d'asservissement $V_a$, $V_b$, on peut donc écrire :

$$F_a = K_a \, V_a^2$$

$$F_b = K_b \, V_b^2$$

et

$$F = F_a - F_b$$

$K_a$ et $K_b$ étant des constantes regroupant les termes $\varepsilon$, S, d, des couples d'électrodes 3 et 4.

On utilise ici des couples d'électrodes 3,4 ayant le même ratio $S/d^2$ ; en posant $K_a = K_b = K$, la force résultante F s'exprime ainsi :

$$F = K \, (V_b^2 - V_a^2) = K \, (v_b + V_a) \, (V_b - v_a)$$

soit

$$F = 4 \, K \, G \, V_0^2 \, V_s \, (\cos \omega t)^2$$

G étant le gain de l'amplificateur 42, $V_0$ l'amplitude de la tension délivrée par la source 41.

Avantageusement, la fréquence f de la tension de source 41 est choisie très grande vis-à-vis de la fréquence de coupure Fc de l'élément pendulaire 2 (Fc = 1/$\tau$, $\tau$ étant la constante de temps mécanique de l'élément pendulaire 2).

On néglige donc ici l'oscillation engendrée par la composante en $2\omega$ du terme $(\cos\omega t)^2$, qui est fortement amortie, et on ne considère que la valeur moyenne F de la force F. La valeur moyenne de la composante en $2\omega$ étant nulle, on peut donc écrire :

$$\bar{F} = 2 \, K \, G \, V_0^2 \, V_S.$$

Il y a bien une relation de proportionnalité entre la force de rappel moyenne $\bar{F}$ et la tension de commande $V_s$ du circuit d'asservissement 40, les termes K, G, $V_0$ étant des constantes.

En pratique on pourra jouer sur le gain G de l'amplificateur 42 et sur l'amplitude $V_0$ de la source de tension 41 pour régler la sensibilité du circuit d'asservissement 40.

On notera que les forces électrostatiques engendrées par les tensions de détection u, - u ne sont pas prises en compte dans l'expression de la force F ; en effet ces forces sont d'intensités égales et s'annulent mutuellement dans leur effet sur l'élément pendulaire 2. De préférence, pour que les circuits de détection 30 et d'asservissement 40 agissent dans des domaines fréquentiels bien distincts, les fréquences f et f' sont choisies très éloignées l'une de l'autre, et de façon à ce que l'une ne soit pas un multiple de l'autre, pour éviter que des harmoniques de la fréquence f d'asservissement n'interfèrent avec la fréquence f' de détection.

Dans la pratique, il faut cependant tenir compte de l'influence des tensions $V_a$ et $V_b$, qui génèrent à l'entrée de la chaîne de détection 35 un courant parasite pouvant saturer celle-ci, et qu'il est préférable de supprimer. A cet effet, le circuit d'asservissement 40 comprend, en outre, un amplificateur 46 de gain g réglable dont l'entrée reçoit la tension de source 41 et dont la sortie est reliée à un condensateur 47 relié par son autre extrêmité à la liaison 31, afin d'y injecter un courant annulant le courant créé par les tensions d'asservissement $V_a$ et $V_b$. Une autre solution consisterait à utiliser classiquement des électrodes différentes pour l'asservissement et pour la détection. Le circuit d'asservissement 40 selon l'invention pourra par ailleurs être utilisé avec un circuit de détection utilisant une autre technique que la détection capacitive, le circuit de détection 30 n'ayant été décrit qu'à titre d'exemple.

On pourra utiliser le circuit d'asservissement 40 selon l'invention dans un micro-capteur comprenant plus de deux paires d'électrodes de rappel électrostatique, en regroupant les paires d'électrodes de rappel en deux groupes de paires d'électrodes agissant chacun dans des directions complémentaires pour le rappel de l'élément pendulaire 2.

Enfin, il apparaitra clairement à l'homme de l'art que l'on peut réaliser de nombreuses autres variantes permettant d'obtenir des tensions d'asservissement ($V_a$, $V_b$) selon l'invention. Dans tous les cas, la différence du carré des amplitudes des tensions d'asservissement ($V_a$, $V_b$) devra être égale au produit d'un terme constant, de préférence réglable, par un terme proportionnel à la tension de commande $V_s$ du circuit d'asservissement.

## Deuxième mode de réalisation de l'invention

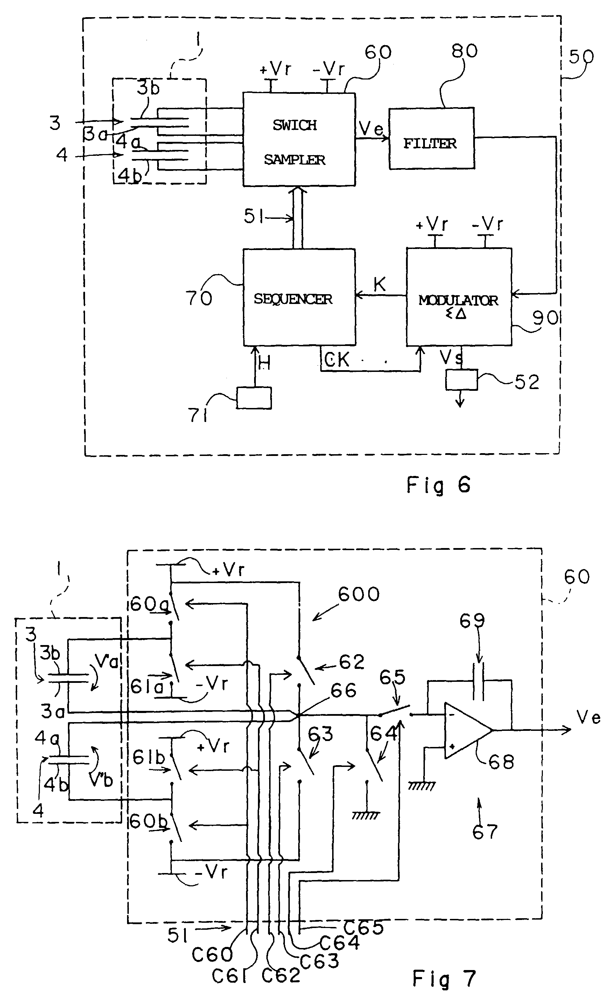

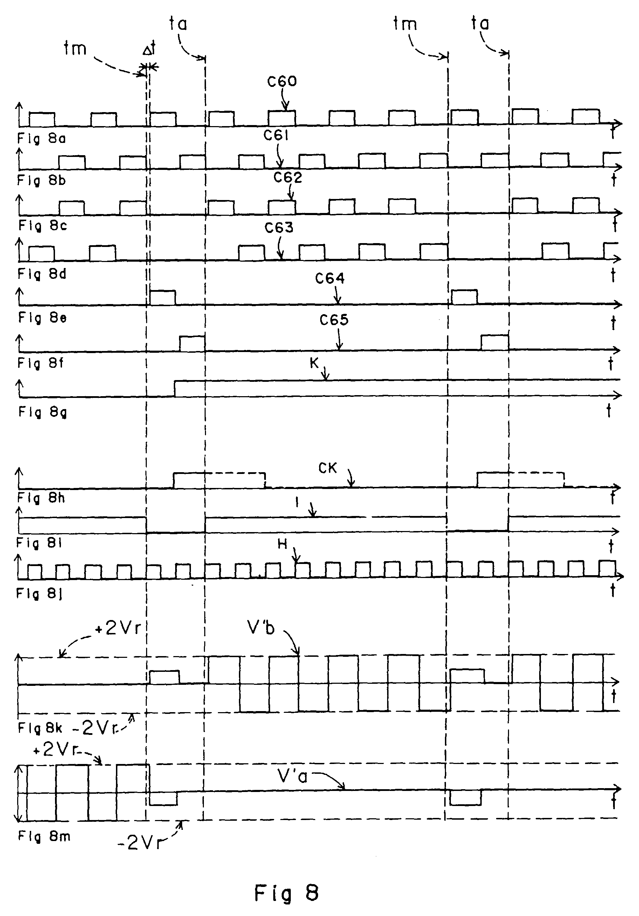

La figure 6 représente par blocs et de façon simplifiée un micro-capteur 50 asservi selon la présente invention.

Le micro-capteur 50 comprend une cellule sensible 1 du type de celles déjà décrites en relation avec les figures 1 à 3, dans laquelle les électrodes de rappel 3a, 3b et 4a, 4b font office de condensateurs de détection 3, 4. L'emploi des mêmes électrodes pour la mesure et l'asservissement impose une méthode de séparation des signaux. Dans le premier mode de réalisation de l'invention décrit précédemment, la séparation s'effectuait dans le domaine fréquentiel. Ici, on réalise un multiplexage temporel, c'est à dire une séparation dans le temps d'une phase de mesure et d'une phase d'asservissement.

A cet effet le micro-capteur 50 comprend un séquenceur logique 70 pour séquencer des phases de mesure et d'asservissement, cadencé par une horloge 71 et contrôlant, par l'intermédiaire d'un bus parallèle 51, un module de commutation et d'échantillonnage 60.

Le module de commutation et d'échantillonnage 60 est relié aux condensateurs 3, 4 de la cellule sensible 1, et réalise cycliquement, à partir de deux tensions continues opposées $+V_r$ et $-V_r$, des opérations d'asservissement, et de mesure de l'écart des capacités de détection 3, 4. Le module 60 délivre une tension d'erreur $V_e$ échantillonnée représentative de l'écart entre les capacités 3,4, qui, après filtrage dans un filtre de boucle 80 du type PID dont le rôle est d'assurer la stabilité de l'asservissement, est appliqué en entrée d'un modulateur numérique 90 du type sigma-delta, utilisant comme tensions internes de référence les tensions $+V_r$ et $-V_r$, et délivrant au séquenceur 70 un signal logique K dont la valeur moyenne est proportionnelle à la tension d'erreur $V_e$. Le signal logique K est validé par un signal logique de synchronisation CK délivré par le séquenceur 70 et appliqué au modulateur 90. Le modulateur 90 délivre par ailleurs un signal de sortie $V_s$ utilisé comme signal de sortie du micro-capteur 50 après filtrage dans une cellule passe-bas 52. Les tensions $+V_r$ et $-V_r$ peuvent provenir d'une source d'alimentation externe, ou de la conversion de la tension d'alimentation des circuits du micro-capteur 50, non représentée sur la figure 6.

La figure 7 illustre de façon schématique les circuits du commutateur-échantillonneur 60. Le module 60 comprend un groupe 600 d'interrupteurs comportant ici huit interrupteurs désignés par 60a,60b,61a,61b, 62,63, 64,65 et commandés par des signaux logiques, respectivement C60, C61, C62, C63, C64, C65 émis par le séquenceur 70 et véhiculés sur le bus 51. Les interrupteurs 60a et 60b sont commandés tous deux par le signal C60, et les interrupteurs 61a et 61b par le signal C61.

Les interrupteurs 60a,60b,61a,61b,62,63 sont reliés par groupes de deux pour former trois ponts d'interrupteurs respectivement 60a et 61a, 61b et 60b, 62 et 63, disposés entre les tensions $+V_r$ et $-V_r$, les interrupteurs 60a, 61b, 62 étant reliés à la tension $+V_r$ et les interrupteurs 61a, 60b, 63 à la tension $-V_r$. Le point milieu du pont formé par les interrupteurs 60a, 61a est relié à l'électrode 3b du condensateur 3, le point milieu du pont formé par les interrupteurs 61b, 60b étant, de façon similaire, relié à l'électrode 4b du condensateur 4.

Un noeud 66 relie les électrodes 3a et 4a, le point milieu du pont formé par les interrupteurs 62 et 63, et les extrêmités respectives des interrupteurs 64 et 65. L'autre extrêmité de l'interrupteur 64 est reliée à la masse du micro-capteur 50, l'interrupteur 65 menant à un intégrateur 67 comprenant ici un amplificateur opérationnel 68 ayant sa sortie ramenée à l'entrée négative par un condensateur 69, et son entrée positive à la masse. En sortie de l'intégrateur 67, on trouve le signal d'erreur $V_e$ cité plus haut.

Sur la figure 8, on a choisi de détailler le séquenceur 70 en illustrant les chronogrammes des signaux que le séquenceur 70 émet et reçoit, et de certains signaux internes. L'homme de l'art notera que le séquenceur 70 peut être classiquement réalisé par de la logique cablée, ou au moyen d'un microprocesseur, ou encore par un circuit intégré spécifique, dès lors que les chronogrammes des signaux à séquencer sont connus.

En référence à la figure 8, les figures 8a, 8b, 8c, 8d, 8e, 8f, représentent les chronogrammes des états des commandes C60, C61, C62, C63, C64, C65, respectivement.

La figure 8g représente le chronogramme du signal logique K reçu par le séquenceur 70 et délivré par le modulateur 90.

La figure 8h représente le chronogramme du signal CK de validation du signal K, appliqué par le séquenceur 70 au modulateur 90.

La figure 8i représente le chronogramme d'un signal d'état I interne au séquenceur 70, fixé par convention à 1 pour les phases d'asservissement et à O pour les phases de mesure.

La figure 8j représente les signaux H de l'horloge 71 constituant la base de temps du séquenceur 70.

Les figures 8k et 8m représentent respectivement les courbes $V'_b$ et $V'_a$ des tensions aux bornes des condensateurs 4 et 3, dont les sens de référence sont indiqués par des flèches sur la figure 7.

On a représenté sur la figure 8, par des traits verticaux en pointillés, les temps $t_a$ et $t_m$ à partir desquels débutent les phases d'asservissement ($t_a$) et de mesure ($t_m$). Les phases de mesure d'asservissement se succèdent ici sans interruption, on a choisi ici des durées de deux périodes d'horloge 71 pour la phase de mesure (I = 0) et huit périodes d'horloge 71 pour la phase d'asservissement (I = 1)

Par convention, les commandes C60 à C65 sont mises à l'état logique 1 pour provoquer la fermeture des interrupteurs 60a à 65.

L'horloge 71 délivre des signaux H carrés (fig.8j) dont le rapport cyclique est égal à 0,5.

Le signal CK (fig 8h) est mis à 1 par le séquenceur 70 au milieu de chaque phase de mesure ($t_m$ à $t_a$) pour provoquer en sortie du modulateur numérique 90 le chargement d'une nouvelle valeur du signal K. Le signal K ne peut changer de valeur que sur une variation (ici un front montant) de la commande CK, la valeur de K restant donc constante tout au long des phases d'asservissement. Un exemple de réalisation du modulateur 90 sera décrit ci-après, on notera pour l'instant que le signal K à 1 indique ici au séquenceur 70 qu'une force d'attraction électrostatique doit être générée entre les électrodes 4a, 4b du condensateur 4, le signal K à O indiquant que la force électrostatique doit être générée entre les électrodes 3a, 3b du condensateur 3.

Les durées pendant lesquelles les commandes C60 à C65 sont à 1, ne dépassent pas ici la durée d'une période d'horloge 71. Par ailleurs, pour écarter les risques de court-circuits, chacune des commandes C60 à C65 passe ici à la valeur 1 (fermeture interrupteurs) avec un léger retard par rapport aux fronts d'horloge 71 (fig. 8j). On a représenté ce léger décalage $\Delta t$ sur la figure 8 par un trait en pointillés.

On voit sur les figures 8a et 8b que les chronogrammes des commandes C60 et C61 sont réguliers et ne dépendent pas des phases en cours (mesure ou asservissement). Les commandes C60 et C61 sont disjointes et passent chacune à 1 toutes les deux périodes d'horloge 71 pour une durée d'une période. Il y a donc à chaque période d'horloge, l'une des deux commandes C60, C61 qui est à 1 l'autre étant à 0. Ici, C60 passe toujours à 1 en début des périodes d'asservissement ($t=t_a$) et de mesure ($t = t_m$).

Phases d'asservissement

Les commandes C62 et C63 sont utilisées pour les phases d'asservissement, C62 et C63 étant à 0 pendant les phases de mesure. Pendant les phases d'asservissement, les chronogrammes de C62 et C63 sont identiques à ceux de C60 et C61. Lorsque K = 1, C62 est synchrone avec C60, et C63 synchrone avec C61. Lorsque K = 0, C62 est synchrone avec C61, et C63 synchrone avec C60.

Les figures 8k et 8m illustrent les variations des tensions $V'_b$ et $V'_a$ aux bornes des condensateurs 4 et 3, résultant du séquencement des commandes C60, C61, C62 et C63 décrit ci-dessus.

Lorsque K = 1 la tension $V'_a$ est nulle et la tension $V'_b$ fluctue alternativement, à chaque période d'horloge 71, de $+2V_r$ à $-2V_r$ ou de $-2V_r$ à $+2V_r$. La force électrostatique est donc générée sur le couple d'électrodes 4a, 4b, la valeur de la force peut être calculée en prenant la valeur moyenne du carré de la tension $V'_b$, équivalente ici au carré d'une tension continue de valeur $+ 2V_r$, mais avec les avantages de l'invention vis-à-vis des tensions parasites, car sa valeur moyenne est nulle.

Lorsque K = 0, la tension $V'_b$ est nulle, et la tension $V'_a$ est équivalente à la tension $V'_b$ décrite pour K = 1, la force électrostatique étant alors appliquée au couple d'électrodes 3a, 3b.

Phases de mesure

Les commandes C 64 et C 65 ne sont utilisées que pendant les phases de mesure, C 64 et C 65 étant à 0 pendant les phases d'asservissement. Pendant les phases de mesure, valant ici deux périodes d'horloge 71, C64 est à 1 et C65 est à 0 pendant la première période d'horloge, C64 est à 0 et C65 à 1 pendant la deuxième période d'horloge. Pendant la première période d'horloge, les condensateurs 3 et 4 se chargent respectivement aux valeurs $V'_a = -V_r$ et $V'_b = +V_r$. Lorsque C 65 passe à 1 (C 64 à 0), les condensateurs se déchargent simultanément dans l'intégrateur 67, par le noeud 66 et l'interrupteur 65, avec des courants de sens opposés. La capacité 69 de l'intégrateur 67 se charge (ou se décharge) d'une quantité d'électricité directement proportionnelle à l'écart entre les capacités de détection 3 et 4. A la sortie de l'intégrateur 67, la tension d'erreur $V_e$ varie, par rapport à sa valeur acquise lors des phases de mesures précédentes, d'une quantité positive ou négative selon l'écart des capacités de détection 3,4.

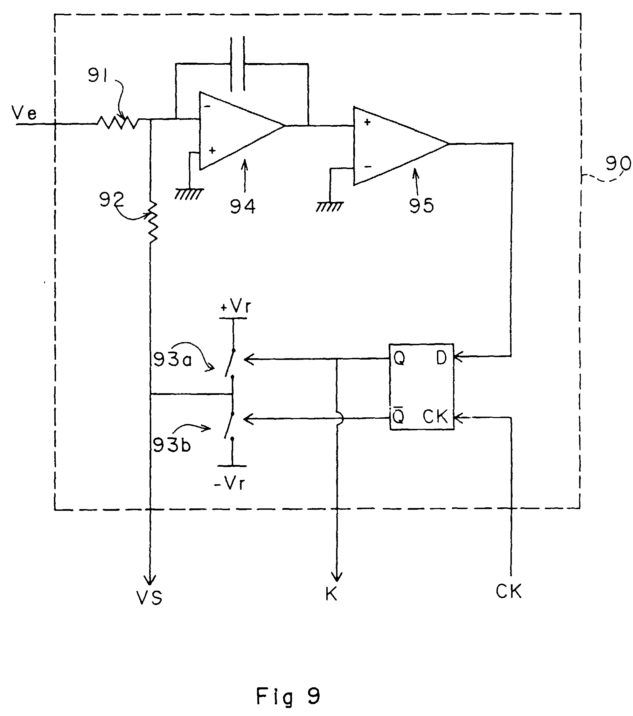

La figure 9 illustre un mode de réalisation d'un modulateur numérique 90 du type sigma-delta. La tension $V_e$ est appliquée à une extrêmité d'un pont de résistances 91, 92 de même valeur, relié doublement par son autre extrêmité à deux interrupteurs 93a, 93b menant aux tensions $+V_r$, respectivement $-V_r$.

Le point milieu du pont de résistances 91, 92 est appliqué en entrée d'un intégrateur 94 attaquant l'entrée positive d'un comparateur 95 ayant son entrée négative reliée à la masse, la sortie du comparateur 95 étant appliquée en entrée d'une bascule D dont la sortie Q est validée par le signal CK du séquenceur 70. La sortie Q fournit le signal K, et commande simultanément l'interrupteur 93a, l'interrupteur 93b étant commandé par la sortie $\overline{Q}$ inverse de la sortie Q.

Le modulateur 90 réalise une modulation de la valeur moyenne du signal K prélevé à la sortie Q de la bascule D. Cette modulation s'observe sur un grand nombre de cycles du modulateur 90, les cycles étant cadencés par le signal CK. Si on fait le bilan des valeurs du signal K sur un grand nombre de cycles, on remarquera que la répartition des valeurs K = 1 et K = 0 dépend de la tension $V_e$. En effet la tension de sortie de l'intégrateur 94 est constituée d'une succession de rampes de tensions croissante ou décroissante fluctuant autour du potentiel zéro. Selon le signe et l'importance de $V_e$, les pentes des rampes de tensions sont inégales et la sortie du comparateur 95 est à 1 ou à 0 pendant des temps inégaux, ce qui se traduit par une inégale répartition des valeurs K = 1 et K = 0, et par conséquence en une inégale répartition des forces appliquées au couple d'électrodes 3a, 3b et au couple d'électrodes 4a, 4b.

La tension de sortie $V_s$ du micro-capteur 50, appliquée au circuit passe bas 52 décrit en relation avec la figure 6, est ici prélevée au point milieu du pont d'interrupteur 93a, 93b du modulateur 90. Pour obtenir une tension de sortie $V_s$ qui soit l'image exacte de la force de rappel on pourrait prévoir des moyens d'inhibition de la commande des interrupteurs 93a, 93b pendant les phases de mesure, afin que les interrupteurs 93a et 93b soient maintenus ouverts pendant les phases de mesure. On pourrait aussi utiliser le signal K comme signal de sortie numérique, ou encore la tension $V_e$ (prélevée en sortie du filtre 80) comme signal de sortie analogique.

La précision du micro-capteur 50 dépend de la fréquence de l'horloge 71 qui fixe les durées des cycles (asservissement et mesure).
En pratique, on se donne une référence de temps T inférieure à la constante de temps mécanique de l'élément pendulaire 2, et on choisit la fréquence d'horloge 71 de façon à ce que le micro-capteur 50 réalise un très grand nombre de cycles pendant cette unité de temps T. On peut ensuite jouer sur les valeurs des tensions $+V_r$, $-V_r$ pour ajuster la plage dynamique du micro-capteur 50.

On notera que l'agencement des interrupteurs du groupe 600 décrit précédemment, permet avantageusement d'obtenir des tensions d'asservissement ($-2V_r$, $+2V_r$) d'amplitudes valant le double de celle des tensions de source $+V_r$, $-V_r$. On a donc ici une meilleure plage dynamique que celle que l'on pourrait obtenir avec un agencement plus simple, comportant moins d'interrupteurs, mais donnant des tensions d'asservissement dont les amplitudes n'excéderaient pas $+V_r$ et $-V_r$.

La force électrostatique appliquée à l'un ou l'autre des couples d'électrodes 3a, 3b ou 4a, 4b pendant une seule phase d'asservissement n'est pas significative et n'est qu'un échantillon de la force de rappel globale agissant sur l'élément pendulaire 2. L'homme de l'art notera qu'il faut faire le bilan des forces contraires appliquées à l'élément pendulaire 2 par les couples d'électrodes 3a, 3b et 4a, 4b, pour calculer la force électrostatique de rappel agissant par exemple pendant le temps T. Il apparaîtra que la force de rappel moyenne est proportionnelle à la valeur moyenne du signal K et que les conditions d'asservissement de l'élément pendulaire 2 sont donc vérifiées.

Dans l'exemple de réalisation décrit, on a choisi une fréquence de l'horloge 71 valant 1 mégahertz, la fréquence de coupure $F_c$ de l'élément pendulaire 2 étant de l'ordre de 10 hertz, et la constante de temps mécanique $\tau$ de l'ordre de 0,1 s. On voit que le micro-capteur 50 réalise ici 10 000 cycles d'asservissement et de mesure pendant une durée correspondant à la constante de temps $\tau$.

On notera qu'il n'était pas indispensable d'utiliser des tensions d'asservissement $V'_a$, $V'_b$ de valeur moyenne nulle à chaque phase d'asservissement, bien qu'il soit préférable que les fluctuations des tensions d'asservissement $V'_a$, $V'_b$ s'effectuent dans des temps les plus brefs vis-à-vis de la constante de temps $\tau$.
On pourrait dans une variante de réalisation, faire alterner ($+2V_r$, $-2V_r$) plus lentement chaque tension d'asservissement $V'_a$, $V'_b$ (par exemple d'une phase d'asservissement à une autre), de façon à ce que les tensions d'asservissement n'aient chacune une valeur moyenne nulle qu'après plusieurs cycles d'asservissement.

On a décrit et représenté ci-dessus les éléments essentiels des micro-capteurs de l'invention. Il apparaîtra clairement à l'homme de l'art que l'on peut apporter diverses variantes et modifications aux exemples de micro-capteurs décrits ci-dessus.

Il apparaîtra aussi à l'homme de l'art que le procédé de l'invention peut être mis en oeuvre de diverses façons, et notamment adapté aux micro-capteurs connus, en modifiant seulement les circuits délivrant les tensions de commande de la force d'asservissement électrostatique, afin que les tensions de commande aient une valeur moyenne nulle.

## Revendications

1. Procédé pour produire une force d'attraction électrostatique entre une électrode mobile (3a,4a) et une électrode fixe (3b,4b) d'un micro-capteur (10,50) de grandeur physique, ladite électrode mobile étant solidaire d'un élément pendulaire (2) sensible à ladite grandeur physique, caractérisé en ce qu'il consiste à appliquer auxdites électrodes une tension électrique $(V_a, V_b, V'_a, V'_b)$ de valeur moyenne nulle.

2. Procédé selon la revendication 1, caractérisé par le fait que ladite tension électrique $(V_a, V_b)$ est une tension périodique de fréquence (f) très supérieure à la fréquence de coupure (Fc) de l'élément pendulaire.

3. Procédé selon la revendication 1, caractérisé par le fait que ladite tension électrique $(V'_a, V'_b)$ comprend une pluralité de signaux électriques de mêmes durées $(t_m - t_a)$.

4. Procédé selon la revendication 3, dans lequel chacun desdits signaux électriques a une valeur moyenne nulle.

5. Procédé selon la revendication 4, dans lequel chacune desdits signaux électriques comprend un train d'impulsions périodiques $(+2V_r, -2V_r)$.

6. Procédé selon la revendication 5, dans lequel lesdits trains d'impulsions périodiques comprennent une alternance de créneaux de tensions continues de signes contraires $(+2V_r, -2V_r)$.

7. Procédé selon la revendication 2, pour asservir au moyen de forces électrostatiques $(F_a, F_b)$ un élément pendulaire (2) d'un micro-capteur comprenant au moins une première (3) et une deuxième (4) paires d'électrodes comportant chacune une électrode mobile (3a,4a) solidaire de l'élément pendulaire et une électrode fixe (3b,4b) disposée en regard de ladite électrode mobile, et un système de détection (3,4,30) des déplacements de l'élément pendulaire délivrant un signal de commande $(V_s)$ de l'asservissement à réaliser, dans lequel on applique respectivement sur les paires d'électrodes (3,4) une première tension $(V_a)$ et une deuxième tension $(V_b)$ d'asservissement, caractérisé en ce que lesdites première et deuxième tensions d'asservissement $(V_a, V_b)$ sont des tensions de même fréquence (f) et en ce que la différence des carrés des amplitudes respectives des première et deuxième tensions d'asservissement constitue le produit d'un terme constant $(2GV_o)$ par un terme proportionnel $(2V_sV_o)$ audit signal de commande $(V_s)$.

8. Procédé selon la revendication 7, caractérisé en ce que ladite première tension d'asservissement $(V_a)$, respectivement deuxième tension d'asservissement $(V_b)$, est obtenue par soustraction (45), respectivement par addition (44), d'une tension périodique d'amplitude $(GV_o)$ constante et d'une tension périodique d'amplitude $(V_sV_o)$ proportionnelle audit signal de commande $(V_s)$.

9. Micro-capteur (10) asservi selon le procédé de la revendication 8, caractérisé en ce que ledit signal de commande est une tension $(V_s)$, ladite tension d'amplitude (GVo) constante est délivrée par un amplificateur (42) auquel est appliqué une tension d'une source de tension périodique (41), et ladite tension d'amplitude $(V_sV_o)$ proportionnelle au signal de commande est délivrée par un multiplieur (43) recevant sur ses entrées respectives ladite tension de source (41) et la tension de commande $(V_s)$.

10. Micro-capteur (10) selon la revendication 9, caractérisé en ce qu'il comprend un circuit de détection capacitive (30) délivrant des tensions périodiques (u, - u) de détection du déséquilibre des capacités desdites paires d'électrodes (3,4), des moyens (11, 12) pour ajouter les tensions de détection (u, - u) auxdites tensions d'asservissement $(V_a \ V_b)$, lesdites paires d'électrodes ayant chacune une électrode $(3_a, 4_a)$ reliée à l'entrée (39) du système de détection (30), et des moyens (46, 47) pour injecter en entrée (39) du circuit de détection (30) un courant annulant le courant dû auxdites tensions d'asservissement $(V_a, V_b)$.

11. Micro-capteur (10) selon la revendication 10, caractérisé en ce que lesdits moyens (46, 47) pour injecter un courant annulant le courant d'asservissement comprennent un amplificateur (46) recevant en entrée ladite tension de source (41) et attaquant l'entrée (39) du circuit de détection (30) par l'intermédiaire d'un condensateur (47).

12. Micro-capteur (50) pendulaire asservi au moyen de forces électrostatiques produites selon le procédé de l'une des revendications 3 à 6, comprenant un élément pendulaire (2) agencé pour être soumis à une force représentative d'une grandeur physique à mesurer, au moins une première (3) et une deuxième (4) paires d'électrodes comportant chacune une électrode mobile $(3_a, 4_a)$ solidaire de l'élément pendulaire et une électrode fixe $(3_b, 4_b)$ disposée en regard de ladite électrode mobile, caractérisé en ce qu'il comprend :

- un groupe (600) d'interrupteurs ($60_a$, $60_b$, $61_a$, $61_b$, 62, 63, 64, 65) et au moins deux sources de tensions continues de signes contraires $(+V_r, -V_r)$,

- un circuit intégrateur (67) dont la sortie est appliquée en entrée d'un modulateur numérique (90) du type sigma-delta par l'intermédiaire d'un filtre (80), ledit modulateur numérique (90) délivrant un signal logique (K) dont la valeur moyenne est modulée en fonction de la tension de sortie dudit circuit intégrateur (67),

- un circuit numérique (70) de séquencement et de commande dudit groupe d'interrupteurs (600), auquel est appliqué le signal logique (K), ledit circuit numérique (70) et ledit groupe d'interrupteurs (600) étant agencés pour :

- pendant des phases d'asservissement électrostatique de l'élément pendulaire :

- connecter par alternance au moins une électrode d'une paire d'électrodes (3, 4) choisie en fonction de la valeur dudit signal logique (K), à chacune desdites sources de tensions continues $(+V_r, -V_r)$, et
- alterner la source de tension continue $(+V_r, -V_r)$ connectée à ladite au moins une électrode d'une paire d'électrodes choisie, plusieurs fois pendant une phase d'asservissement, ou plusieurs fois pendant plusieurs phases d'asservissement,

- pendant des phases de détection de la position de l'élément pendulaire (2), suivant chaque phase d'asservissement :

- charger les capacités des paires d'électrodes (3, 4) au moyen desdites tensions de sources $(+V_r, -V_r)$, puis décharger simultanément lesdites capacités dans ledit intégrateur (67), avec des courants respectifs contraires.

13. Micro-capteur selon la revendication 12, caractérisé en ce que chaque électrode $(3_a, 3_b, 4_a, 4_b)$ de chaque paire d'électrodes (3,4) est reliée à chacune desdites sources de tensions continues $(+V_r, -V_r)$ par l'intermédiaire d'un interrupteur dudit groupe (600) d'interrupteurs.

14. Micro-capteur selon l'une des revendications 12 ou 13, caractérisé en ce que le modulateur numérique (90) est cadencé par un signal de synchronisation (CK) délivré par le circuit de séquencement (70) après chaque phase d'asservissement.

15. Micro-capteur selon la revendication 14, caractérisé en ce que le signal de synchronisation (CK) valide ledit signal logique (K).

16. Micro-capteur (50) selon l'une des revendications 12 à 15, dans lequel ledit filtre (30) est du type proportionnel, intégral et dérivé.

## Patentansprüche

1. Verfahren zur Erzeugung einer elektrostatischen Anziehungskraft zwischen einer beweglichen Elektrode (3a, 4a) und einer festen Elektrode (3b, 4b) eines Mikrosensors (10, 50) für eine physikalische Größe, wobei die bewegliche Elektrode mit einem auf die genannte physikalische Größe ansprechenden Pendelelement (2) fest verbunden bzw. einstückig mit ihm ist,
dadurch gekennzeichnet, daß man an die genannten Elektroden eine elektrische Spannung $(V_a, V_b, V'_a, V'_b)$ vom Mittel- bzw. Durchschnittsbetrag Null anlegt.

2. Verfahren nach Anspruch 1,
dadurch gekennzeichnet, daß die genannte elektrische Spannung $(V_a, V_b)$ eine periodische Spannung mit einer Frequenz (f) ist, die wesentlich höher als die kritische oder Grenzfrequenz (Fc) des Pendelelements ist.

3. Verfahren nach Anspruch 1,
dadurch gekennzeichnet, daß die genannte elektrische Spannung $(V'_a, V'_b)$ eine Mehrzahl elektrischer Signale von jeweils gleicher Dauer $(t_m - t_a)$ aufweist.

4. Verfahren nach Anspruch 3,
dadurch gekennzeichnet, daß jeweils jedes der genannten elektrischen Signale einen Mittelwert Null besitzt.

5. Verfahren nach Anspruch 4,
dadurch gekennzeichnet, daß jeweils jedes der genannten elektrischen Signale eine Folge periodischer Impulse $(+2V_r, -2V_r)$ aufweist.

6. Verfahren nach Anspruch 5,
dadurch gekennzeichnet, daß die genannten periodischen Impulsfolgen eine abwechselnde Aufeinanderfolge von Gleichspannungsimpulsen von entgegengesetztem Vorzeichen $(+2V_r, -2V_r)$ umfassen.

7. Verfahren nach Anspruch 2, zur Servo- oder Rückkopplungssteuerung eines Pendelelements (2) eines Mikrosensors mittels elektrostatischer Kräfte $(F_a, F_b)$, wobei der Mikrosensor wenigstens ein erstes (3) und ein zweites (4) Elektrodenpaar aufweist, von denen jeweils jedes eine mit dem Pendelelement fest verbundene oder einstückig ausgebildete bewegliche Elektrode (3a, 4a) und eine der

beweglichen Elektrode gegenüberstehend angeordnete feste Elektrode (3b, 4b) aufweist, sowie ein Nachweis- bzw. Detektionssystem (3, 4, 30) zum Nachweis der Verschiebungen des Pendelelements zur Erzeugung eines Steuersignals ($V_s$) für die gewünschte Servo- bzw. Rückkopplungsregelung, wobei an die Elektrodenpaare (3, 4) jeweils eine erste Spannung ($V_a$) und eine zweite Rück-kopplungs- bzw. Servospannung ($V_b$) angelegt wird,
dadurch gekennzeichnet, daß die genannten ersten und zweiten Rückkopplungs- bzw. Servospan-nungen ($V_a$, $V_b$) Spannungen gleicher Frequenz (f) sind und daß der Unterschied zwischen den jeweiligen Amplitudenquadraten der ersten und der zweiten Rückkopplungs- bzw. Servospannung das Produkt aus einem konstanten Term ($2GV_o$) mit ei-nem zu dem genannten Steuersignal ($V_s$) propor-tionalen Term ($2V_sV_o$) darstellt.

8.  Verfahren nach Anspruch 7,
dadurch gekennzeichnet, daß die genannte erste Servospannung ($V_a$) bzw. zweite Servospannung ($V_b$) durch Subtraktion (45) bzw. Addition (44) einer periodischen Spannung konstanter Amplitude ($GV_o$) und einer periodischen Spannung von zu dem genannten Steuersignal ($V_s$) proportionaler Amplitude ($V_sV_o$) gebildet wird.

9.  Mikrosensor (10) mit Servosteuerung gemäß dem Verfahren nach Anspruch 8,
dadurch gekennzeichnet, daß das genannte Steu-ersignal eine Spannung ($V_s$) ist, daß die genannte Spannung mit konstanter Amplitude ($GV_o$) durch ei-nen Verstärker (42) geliefert wird, an den eine Spannung von einer Spannungsquelle mit periodischer Spannung (41) angelegt wird, und daß die genannte Spannung mit zum Steuersignal proportio-naler Amplitude ($V_sV_o$) von einer Multipliziervorrich-tung (43) geliefert wird, der an ihren Eingängen die genannte Spannung der Quelle (41) und die Steu-erspannung ($V_s$) zugeführt werden.

10. Mikrosensor (10) nach Anspruch 9,
dadurch gekennzeichnet, daß sie eine kapazitive Detektions- bzw. Nachweisschaltung (30) aufweist, welche periodische Spannungen (u, - u) als Nachweis des Ungleichgewichts der Kapazitäten der genannten Elektrodenpaare (3, 4) liefert, des weiteren Mittel (11, 12) zum Zufügen bzw. Addieren der Nachweisspannungen (u, - u) zu den genannten Servospannungen ($V_a$, $V_b$), wobei jedes der genannten Elektrodenpaare jeweils eine mit dem Eingang (39) des Nachweissystems (30) verbundene Elektrode (3a, 4a) aufweist, sowie Mittel (46, 47) zum Einführen eines den durch die genannten Ser-vospannungen ($V_a$, $V_b$) bedingten Strom aufhebenden Stroms am Eingang (39) der Nachweisschaltung (30).

11. Mikrosensor (10) nach Anspruch 10,
dadurch gekennzeichnet, daß die genannten Mittel (46, 47) zum Einführen eines den Servostrom aufhebenden Stroms einen Verstärker (46) aufweisen, der am Eingang die genannte Spannung der Spannungsquelle (41) zugeführt erhält und über einen Kondensator (47) auf den Eingang (39) der Nachweisschaltung (30) einwirkt.

12. Pendel-Mikrosensor (50) mit Servoregelung mittels elektrostatischer Kräfte, die nach dem Verfahren gemäß einem der Ansprüche 3 bis 6 erzeugt werden, umfassend ein Pendelelement (2) in solcher Anordnung, daß es einer eine zu messende physikalische Größe wiedergebenden Kraft ausgesetzt ist, mindestens ein erstes (3) und ein zweites (4) Elektrodenpaar, deren jedes jeweils eine mit dem Pendelelement fest verbundene oder einstückige bewegliche Elektrode (3a, 4a) und eine der beweg-lichen Elektrode gegenüber angeordnete feste Elektrode (3b, 4b) aufweist,
dadurch gekennzeichnet, daß er umfaßt:

-   eine Gruppe (600) von Unterbrecherschaltern (60a, 60b, 61a, 61b, 62, 63, 64, 65) und wenig-stens zwei Gleichspannungsquellen von ent-gegengesetztem Vorzeichen ($+V_r$, $-V_r$),

-   eine Integrierschaltung (67), deren Ausgangsgröße über ein Filter (80) dem Eingang eines digitalen Modulators (90) vom Sigma-Delta-Typ zugeführt wird, wobei der genannte Digital-Modulator (90) ein logisches Signal (K) erzeugt, dessen Mittelwert gemäß einer Funktion der Ausgangsspannung der Integrationsschaltung (67) moduliert ist,

-   eine digitale Sequenzier- und Steuerschaltung (70) für die genannte Unterbrecherschaltergruppe (600), welcher das logische Signal (K) zugeführt wird, wobei die genannte digitale Schaltung (70) und die genannte Unterbrecherschaltergruppe (600) so eingerichtet sind, daß:

    .   während Phasen der elektrostatischen Servosteuerung des Pendelelements:

        .   abwechselnd wenigstens eine Elektrode eines Elektrodenpaars (3, 4) in Abhängigkeit vom Betrag des logischen Signals (K) mit jeder der genannten Gleichspannungsquellen ($+V_r$, $-V_r$) verbunden wird und

        .   die mit der genannten wenigstens einen Elektrode eines ausgewählten

Elektrodenpaars verbundene Gleichspannungsquelle (+V$_r$, -V$_r$) mehrere Male während einer Servophase oder mehrere Male während mehrerer Servophasen alterniert wird;

. während Phasen der Stellungsdetektion des Pendelelements (2) nach jeder Servophase:

. die Kapazitäten der Elektrodenpaare (3, 4) mit Hilfe der genannten Spannungsquellen (+V$_r$, -V$_r$) aufgeladen und sodann gleichzeitig die genannten Kapazitäten in dem genannten Integrator (67) mit entsprechenden Gegenströmen entladen werden.

13. Mikrosensor nach Anspruch 12,
dadurch gekennzeichnet, daß jede Elektrode (3$_a$, 3$_b$, 4$_a$, 4$_b$) jedes Elektrodenpaars (3, 4) mit jeder der genannten Gleichspannungsquellen (+V$_r$, -V$_r$) über einen Unterbrecherschalter der genannten Schaltergruppe (600) verbunden ist.

14. Mikrosensor nach einem der Ansprüche 12 oder 13, dadurch gekennzeichnet, daß der digitale Modulator (90) durch ein Synchronisationssignal (CK) taktgesteuert wird, das von der Sequenzierschaltung (70) nach jeder Servophase geliefert wird.

15. Mikrosensor nach Anspruch 14,
dadurch gekennzeichnet, daß das Synchronisationssignal (CK) das genannte logische Signal (K) validiert.

16. Mikrosensor (50) nach einem der Ansprüche 12 bis 15, bei welchem das genannte Filter (30) vom Proportional-, Integral- und Differenzier-Typ ist.

**Claims**

1. A method for providing an electrostatic attraction force between a mobile electrode (3a, 4a) and a fixed electrode (3b, 4b) for a micro-sensor (10, 50) measuring a physical quantity, said mobile electrode (3a, 4a) being integral with a pendular element (2) sensitive to said physical quantity, characterised in that it consists in applying to said electrodes a voltage (V$_a$, V$_b$, V'$_a$, V'$_b$) having a zero mean value.

2. The method of claim 1, characterized in that said voltage (V$_a$, V$_b$) is a periodic voltage having a frequency (f) significantly higher than the cut-off frequency (F$_c$) of the pendular element.

3. The method of claim 1, characterized in that said voltage (V'$_a$, V'$_b$) includes a plurality of electric signals of equal durations (t$_m$ - t$_a$ ).

4. The method of claim 3, wherein each of said electric signals has a zero mean value.

5. The method of claim 4, wherein each of said electric signals includes a periodic pulse train (+2V$_r$, - 2V$_r$).

6. The method of claim 5, wherein said periodic pulse trains comprise alternate d.c. voltages of opposite polarities (+2V$_r$, -2V$_r$).

7. The method of claim 2, for servo-controlling through electrostatic forces (F$_a$, F$_b$) a pendular element (2) of a micro-sensor including at least one first (3) and one second (4) electrode pair each containing a mobile electrode (3a, 4a) associated with said pendular element, and a fixed electrode (3b, 4b) disposed so as to face said mobile electrode, and a system (3, 4, 30) for detecting the displacements of said pendular element providing a control signal (V$_s$) for the servo-control operation to be achieved, wherein a first control voltage (V$_a$) and a second control voltage (V$_b$) are respectively applied on said electrode pairs (3, 4), characterized in that said first and second control voltages (V$_a$, V$_b$) have the same frequency (f), and
the difference of the squared respective amplitudes of said first and second control voltages is the product of a constant term (2GV$_o$) by a term (2V$_s$V$_o$) proportional to said control signal (V$_s$).

8. The method of claim 7, characterized in that said first control voltage (V$_a$) is obtained by subtraction (45), and said second control voltage (V$_b$) is obtained by addition (44), of a periodic voltage having a constant amplitude (GV$_o$) and of a periodic voltage having an amplitude (V$_s$V$_o$) proportional to said control signal (V$_s$).

9. A micro-sensor (10) servo-controlled according to the method of claim 8, characterized in that said control signal is a voltage (V$_s$), said voltage of constant amplitude (GVo) is provided by an amplifier (42) to which is applied a source voltage (41) having a periodic voltage, and said amplitude voltage (V$_s$V$_o$) proportional to the control signal is provided by a multiplier (43) receiving at its respective inputs said source voltage (41) and said control voltage (V$_s$).

10. The micro-sensor (10) of claim 9, characterized in that it comprises a capacitive detection circuit (30) providing periodic voltages (u, -u) for detecting the capacity unbalance of said electrode pairs (3, 4), means (11, 12) for adding said detection voltages (u, -u) with said control voltages ($V_a$, $V_b$), each of said electrode pairs having an electrode (3a, 4a) connected to the input (39) of said detection system (30), and means (46, 47) for injecting at the input (39) of said detection circuit (30) a current cancelling the current generated by said control voltages ($V_a$, $V_b$).

11. The micro-sensor (10) of claim 10, characterized in that said means (46, 47) for injecting a current cancelling the control current comprise an amplifier (46) receiving said source voltage (41) and connected to the input (39) of said detection circuit (30) through a capacitor (47).

12. A pendular micro-sensor (50) controlled through electrostatic forces generated according to the method of any of claims 3 to 6, comprising a pendular element (2) disposed so as to respond to a force representative of a physical quantity to be measured, at least one first (3) and one second (4) electrode pair each including a mobile electrode ($3_a$, $4_a$) associated with said pendular element (2) and one fixed electrode ($3_b$, $4_b$) facing said mobile electrodes, characterized in that it comprises:

- an assembly (600) of switches ($60_a$, $60_b$, $61_a$, $61_b$, 62, 63, 64, 65), and at least two d.c. voltage sources of opposite polarities ($+V_r$, $-V_r$);
- an integrating circuit (67) whose output is applied to the input of a digital modulator (90) of the sigma-delta type through a filter (80), said digital modulator (90) providing a logic signal (K) the mean value of which is modulated as a function of the output voltage of said integrating circuit (67);
- a digital circuit (70) for sequencing and controlling said switch assembly (600) to which is applied said logical signal (K), said digital circuit (70) and said switch assembly (600) being arranged for:

  (a) during the electrostatic control phases of said pendular element (2):

  . alternatively connecting at least one electrode of an electrode pair (3, 4) selected as a function of the value of said logic signal (K), to each of said d.c. voltage sources ($+V_r$, $-V_r$), and
  . alternating the d.c. voltage source ($+V_r$, $-V_r$), connected to said at least one electrode of a selected electrode pair, several times during a control phase, or several times during several control phases;

  (b) during the phases of detection of the position of said pendular element (2), following each control phase:

  . charging the capacities of said electrode pairs (3, 4) through said source voltages ($+V_r$, $-V_r$), then simultaneously discharging said capacities in said integrating circuit (67), with respective currents of opposite polarities.

13. The micro-sensor of claim 12, characterized in that each electrode ($3_a$, $3_b$, $4_a$, $4_b$) of each electrode pair (3, 4) is connected to each of said d.c. voltage sources ($+V_r$, $-V_r$) through a switch of said switch assembly (600).

14. The micro-sensor of claim 12 or 13, characterized in that said digital modulator (90) is clocked by a synchronization signal (CK) provided by said sequencing circuit (70) after each control phase.

15. The micro-sensor of claim 14, characterized in that said synchronization signal (CK) enables said logic signal (K).

16. The micro-sensor (50) of any of claims 12 to 15, wherein said filter (30) is of the proportional-integral-derivate type.

Fig 1

Fig 2

Fig 3

Fig 4a

Fig 4b

Fig 5

Fig 6

Fig 7

Fig 8

19

Fig 9